# EUROPÄISCHE PATENTSCHRIFT

(11) **EP 2 603 408 B1**
(45) Veröffentlichungstag und Bekanntmachung des Hinweises auf die Patenterteilung: **21.06.2017**
(21) Anmeldenummer: 11741575.2
(22) Anmeldetag: 10.08.2011
(51) Int. Cl.: B60T 8/1755

(54) **VERFAHREN UND SYSTEM ZUR REGELUNG DER FAHRSTABILITÄT**
METHOD AND SYSTEM FOR REGULATING DRIVING STABILITY
PROCÉDÉ ET SYSTÈME POUR RÉGULER LA STABILITÉ ROUTIÈRE D'UN VÉHICULE

(30) Priorität: 04.03.2011 DE 102011005089; 04.03.2011 DE 102011005090; 10.08.2010 DE 102010039126
(43) Veröffentlichungstag der Anmeldung: 19.06.2013
(73) Patentinhaber: Continental Teves AG & Co. oHG, 60488 Frankfurt (DE)
(72) Erfinder: BRETZIGHEIMER, Kai, 63741 Aschaffenburg (DE); FÖRSTER, Daniel, 64287 Darmstadt (DE); BIAN, Ning, 65760 Eschorn (DE); HARTMANN, Andreas, 88433 Aßmannshardt (DE); STAAB, Thorsten, 63768 Hösbach (DE)
(86) Internationale Anmeldenummer: PCT/EP2011/063798
(87) Internationale Veröffentlichungsnummer: WO 2012/020069

(56) Entgegenhaltungen:
- WO-A1-2007/031578
- DE-A1-102004 033 900
- DE-A1-102005 003 274
- DE-A1-102008 040 241

## Beschreibung

Die Erfindung betrifft ein Verfahren gemäß Oberbegriff von Anspruch 1 und ein elektronisches Steuergerät gemäß Oberbegriff von Anspruch 16.

Neben elektronisch geregelten Bremssystemen, welche Funktionen wie eine Bremsschlupfregelung (ABS), die das Blockieren der Räder während einer Vollbremsung verhindert, und eine Fahrdynamikregelung (ESC) bereitstellen, welche in dynamischen Fahrmanövern durch gezielte Bremseingriffe stabilisierend auf das Kraftfahrzeug einwirkt, besitzen Kraftfahrzeuge in zunehmendem Maße eine Umfeldsensorik, womit andere Verkehrsteilnehmer und unbewegliche Hindernisse erfasst und deren Positionen bzw. Geschwindigkeiten gegenüber dem eigenen Fahrzeug bestimmt werden können.

Die Vernetzung der Umfeldsensorik mit einem elektronisch geregelten Bremssystem ermöglicht eine Abstandsregelung zum vorausfahrenden Kraftfahrzeug (ACC), eine Warnung des Fahrers beim Auftreten besonders kritischer Situationen, und eine automatische Einleitung einer Notbremsung, wenn eine Kollision droht. Um Fehleingriffe zu vermeiden, darf ein solcher Notbremsassistent (EBA) erst spät, d.h. in möglichst geringem Abstand zum Hindernis eingreifen, wodurch in manchen Situationen trotz dieser Fahrerassistenz ein Zusammenstoß mit dem Hindernis bzw. dem anderen Verkehrsteilnehmer durch alleiniges Abbremsen nur abgeschwächt und nicht vermieden werden kann.

Dafür gibt es verschiedene Gründe:
- Das Einhalten eines idealen Abstands zum vorausfahrenden Fahrzeug ist in dichtem Verkehr nicht praktikabel.
- Ein entgegenkommendes Fahrzeug wird zu Beginn eines Überholmanövers übersehen.
- Die Abstandsberechnung des Fahrerassistenzsystems setzt den Reibwert einer ebenen und trockenen Fahrbahn voraus, womit der Bremsweg auf glatter Fahrbahn länger als der Abstand zum Eingriffszeitpunkt ist.

Um einen Zusammenstoß zu verhindern, ist neben der Bremsung daher häufig ein Ausweichmanöver erforderlich. In vielen Situationen kann daneben ein Zusammenstoß auch ohne Bremsung durch ein Ausweichmanöver verhindert werden. Viele Fahrer erleben eine solche Notausweichsituation sehr selten und reagieren beim plötzlichen Auftauchen eines Hindernisses intuitiv mit einer zu dynamischen Lenkeingabe. Bei hohen Geschwindigkeiten kann das insbesondere beim anschließenden Zurücklenken zu heftigen Fahrzeugreaktionen führen.

Daher wurden bereits Systeme entwickelt, die auch ohne Umfeldsensorik den Fahrer bei einem Ausweichmanöver unterstützen. So ist aus der DE 101 19 907 B4 ein Verfahren zur Regelung der Fahrstabilität bekannt, bei dem bei einer stabilen Kurvenfahrt ermittelt wird, ob anhand einer Lenkwinkelgeschwindigkeit und einer gemessenen Querbeschleunigung eine Tendenz zu einem nachfolgenden instabilen Fahrverhalten vorliegt. In diesem Fall erfolgt ein Bremsen-Voreingriff bereits bei einem stabilen Fahrverhalten, wobei der Bremsen-Voreingriff beendet wird, wenn wenigstens ein Richtungswechsel einer Gierrate nach einem Gierratenmaximum festgestellt wird und eine modellbasierte Querbeschleunigung gleich oder kleiner einem Grenzwert ist.

Eine Weiterentwicklung des Verfahrens ist in der WO 2004/074059 offenbart. Hierbei werden eine Fahrsituation charakterisierende Größen erfasst und daraus eine Fahreraktion ermittelt. Wenn anhand des zu erwartenden Fahrverhaltens eine kritische Fahrsituation zu erwarten ist, werden Brems- und/oder Motoreingriffe bereits bei einem stabilen Fahrverhalten vorgenommen. Die Eingriffe werden in Abhängigkeit von einer zu erwartenden Querbeschleunigung vorgenommen, welche die theoretische Querbeschleunigung enthält, die das Fahrzeug zukünftig hat, wenn der Fahrer mit gleichmäßiger Lenkwinkelgeschwindigkeit weiter ein- oder auslenkt. Die beschriebenen Verfahren können zu heftige Lenkmanöver des Fahrers dämpfen und somit ein Schleudern oder Umkippen des Fahrzeugs vermeiden, allerdings stellt die Vermeidung von Fehleingriffen ein Problem dar. Lenkt der Fahrer zu zaghaft, kann dies in einem Teilüberdeckungs-Zusammenstoß resultieren.

In der DE 10 2005 003 274 A1 ist ein Verfahren zur Vermeidung und/oder Minderung der Folgen von Kollisionen beim Ausweichen eines Fahrzeugs vor einem Hindernis beschrieben, bei dem mittels wenigstens eines Umfeldsensors wenigstens ein Hindernis erkannt wird, wobei Daten des Hindernisses ermittelt werden, und auf Basis der Daten des Hindernisses sowie Daten des Fahrzeugs eine zur Unterstützung eines Ausweichvorgangs günstige Fahrzeugverzögerung ermittelt wird und das Fahrzeug entsprechend verzögert wird.

Aus der DE 10 2010 028 384 A1 ist ein Verfahren zur Regelung bzw. Steuerung der Fahrstabilität eines Fahrzeugs und Kollisionsvermeidung mit einem in der Fahrspur befindlichen Objekt bekannt. Anhand von Umfeldsignalen wird ermittelt, ob eine fahrdynamisch kritische Situation, insbesondere eine bevorstehende Kollision vorliegt, und bei Vorliegen einer kritischen Situation eine Ausweichbahn ermittelt. Weiterhin werden anhand von mehreren Eingangsgrößen Drücke für einzelne Bremsen des Fahrzeugs ermittelt, und vorbereitende Maßnahmen des Fahrdynamikreglers wie ein dynamisches Umschalten von Regelparametern aktiviert, wenn die fahrdynamisch kritische Situation vorliegt. In einer bevorzugten Ausführungsform der Erfindung wird anhand der ermittelten Ausweichbahn ein Soll-Lenkwinkel bestimmt, der über ein aktives Lenksystem eingestellt wird. Ein autonomer Lenkeingriff ist im Hinblick auf Produkthaftung und Akzeptanz durch den Fahrer kritisch.

Aufgabe der vorliegenden Erfindung ist es, eine Unterstützung des Fahrers bei einem Ausweichvorgang bereitzustellen, welche die genannten Nachteile vermeidet.

Diese Aufgabe wird durch ein Verfahren gemäß Anspruch 1 und ein elektronisches Steuergerät gemäß Anspruch 16 gelöst.

Es wird also ein Verfahren bereitgestellt, bei dem das Fahrverhalten eines Fahrzeugs in Abhängigkeit von Umgebungsdaten beeinflusst wird, um ein Ausweichmanöver zu unterstützen, sobald eine Kollisionsgefahr anhand der Daten von einem oder mehreren Umfeldsensoren, insbesondere Radarsensoren und/oder Kameras, und der Daten von einem oder mehreren Fahrzeugsensoren, insbesondere Lenkwinkelsensor und/oder Gierratensensor und/oder Raddrehzahlsensoren, erkannt wird, wobei das Fahrzeug ein elektronisch geregeltes Bremssystem aufweist, welches einen fahrerunabhängigen Aufbau und eine Modulation der Bremskräfte an den einzelnen Rädern des Fahrzeugs ermöglicht. Erfindungsgemäß wird bei erkannter Kollisionsgefahr in einer ersten Phase ein Einlenken des Fahrers unterstützt und in einer zweiten Phase ein Lenken des Fahrers gedämpft. Da moderne Fahrzeuge vielfach mit einem System zur Fahrdynamikregelung wie ESC ausgestattet sind, erfordert die Durchführung des erfindungsgemäßen Verfahrens lediglich einen in Fahrtrichtung zeigenden langreichweitigen Sensor, wie einen Radar- oder Lidar-Sensor. Somit ist das erfindungsgemäße Verfahren kostengünstig umsetzbar. Indem in einer ersten Phase ein Einlenken des Fahrers unterstützt wird, kann das Fahrzeug in möglichst großem Abstand zum Hindernis bereits einen zum Ausweichen hinreichenden Querversatz erreichen, wodurch die Gefahr eines Aufpralls mit Teilüberdeckung minimiert wird. Zweckmäßigerweise wird in einer zweiten Phase bereits vor dem Rücklenken des Fahrers ein weiteres Lenken in Ausweichrichtung gedämpft, wodurch ein zu starkes Rücklenken des Fahrers vermieden werden kann, welches in Verbindung mit einer Wankbewegung des Fahrzeugs eine Umkipp- und/oder Schleudergefahr stark erhöht. Falls hingegen der Fahrer überhastet zurücklenkt, kann durch einen geeigneten Bremseingriff auch in dieser Situation die Fahrstabilität gewährleistet werden.

Vorzugsweise wird in der ersten Phase mittels Bremseingriffen, insbesondere eine Bremskraftverringerung am kurvenäußeren Vorderrad oder einen Bremskraftaufbau an einem oder mehreren kurveninneren Rädern, ein zusätzliches Giermoment in Ausweichrichtung aufgebaut. Wenn sich eines oder mehrere Räder des Fahrzeugs in einer Bremsschlupfregelung befinden, das Fahrzeug also vollgebremst wird, können keine zusätzlichen Längskräfte mehr von den Reifen auf die Straße übertragen werden. Durch eine gezielte Verringerung der Bremskraft an einem oder mehreren Rädern kann auch in diesem Fall ein geeignetes zusätzliches Giermoment erzeugt werden. Falls hingegen der vorhandene Reibwert noch nicht optimal genutzt wird, kann ein zusätzlicher Bremskraftaufbau an einem oder mehreren kurveninneren Rädern das für das Ausweichmanöver benötigte zusätzliche Giermoment erzeugen und zusätzlich den Bremsweg bis zum Fahrzeugstillstand weiter verringern.

Bevorzugt wird in der zweiten Phase mittels Bremseingriffen, insbesondere am kurvenäußeren Vorderrad, ein zusätzliches Giermoment entgegen der Ausweichrichtung aufgebaut. Dadurch, dass eine Lenkbewegung des Fahrers in Ausweichrichtung gedämpft wird, verringert sich die Gefahr eines anschließenden zu dynamischen Rücklenkens, welches zu einem Schleudern und besonders bei Fahrzeugen mit hohem Schwerpunkt zu einem Umkippen führen kann.

Zweckmäßigerweise erfolgt zum Aufbau eines zusätzlichen Giermoments eine Anforderung an ein Fahrdynamikregelsystem, insbesondere an ein ESC-System. Da ein an sich bekanntes ESC-System bereits eine geeignete Verteilungslogik besitzt, welche in Abhängigkeit vom Fahrerbremsdruck die zum Aufbau eines zusätzlichen Giermoments benötigten Bremskraftänderungen (z.B. Bremsdruckauf- bzw. abbau) geeignet wählt, kann dadurch eine Ausweichunterstützung besonders einfach realisiert werden.

Es ist vorteilhaft, wenn das Lenken des Fahrers nur dann gedämpft wird, wenn die Fahrzeuggeschwindigkeit einen Fahrgeschwindigkeitsschwellenwert überschreitet. Bei geringen Fahrzeuggeschwindigkeiten ist die Gefahr eines Schleuderns oder Umkippens des Fahrzeugs geringer, wohingegen eine stärkere Lenkbewegung für das Erreichen eines hinreichenden Querversatzes erforderlich ist.

Vorzugsweise wird das Einlenken des Fahrers nur dann unterstützt, wenn die Lenkwinkelgeschwindigkeit einen Lenkschwellenwert unterschreitet. Falls der Fahrer sehr heftig einlenkt, würde eine zusätzliche Lenkunterstützung die Fahrstabilität gefährden, ohne dass diese im Hinblick auf den Querversatz erforderlich ist.

Bevorzugt erfolgt die Dämpfung einer Lenkbewegung des Fahrers in Abhängigkeit von einer gemessenen Querbeschleunigung und/oder einer gemessenen Gierrate und/oder einem geschätzten Reibwert. Wird sichergestellt, dass die gemessene Querbeschleunigung unterhalb eines anhand der Fahreigenschaften des Fahrzeugs ermittelten Schwellwerts bleibt, so kann ein Umkippen des Fahrzeugs verhindert werden. Bekannte Fahrdynamikregelungen weisen Mittel zur Schätzung des Reibwerts auf, so dass anhand des insbesondere in der ersten Phase geschätzten Reibwerts berechnet werden kann, welche Gierrate ohne ein Überschreiten der übertragbaren Kräfte erreichbar ist.

Zweckmäßigerweise wird zur Dämpfung einer Lenkbewegung des Fahrers bei einem System zur Regelung der Schwimmwinkelgeschwindigkeit ein Schwellenwert für die Aktivierung abgesenkt und/oder eine Verstärkung erhöht. An sich bekannte Fahrdynamikregelungen weisen häufig ein System zur Regelung der Schwimmwinkelgeschwindigkeit auf. Indem die Schwimmwinkelgeschwindigkeit begrenzt wird und/oder Abweichungen vom Sollwert stark unterdrückt werden, kann der Aufbau eines zu hohen Schwimmwinkels mit entsprechender Gefährdung der Fahrstabilität verhindert werdern.

Es ist vorteilhaft, wenn bei einem System für eine Gierratenregelung ein Schwellenwert für die Aktivierung abgesenkt und/oder eine Verstärkung erhöht wird. Der Schwellwert zur Aktivierung einer Gierratenregelung ist zur Vermeidung von Fehleingriffen meist recht hoch angesetzt. Wenn anhand der Umfeldsensorik eine kritische Situation erkannt wird, ist es daher vorteilhaft, den Schwellwert abzusenken und/oder eine Verstärkung zu erhöhen, um schneller wieder einen stabilen Fahrzustand zu erreichen.

Gemäß einer bevorzugten Ausführungsform der Erfindung wird bei erkannter Kollisionsgefahr der Zeitpunkt des Beginns der ersten Phase anhand einer erkannten Lenkbewegung des Fahrers bestimmt. Dadurch, dass die erste Phase mit einer Lenkbewegung des Fahrers eingeleitet wird, erfolgt kein die Fahrtrichtung des Fahrzeugs beeinflussender Eingriff ohne entsprechenden Fahrerwunsch.

Gemäß einer bevorzugten Ausführungsform der Erfindung wird der Zeitpunkt des Beginns der zweiten Phase anhand einer Betrachtung der integrierten Gierrate und des benötigten Querversatzes bestimmt. Anhand der Umfeldsensorik kann der benötigte Querversatz ermittelt werden (z.B. die halbe Breite des Hindernisses plus die halbe Breite des Fahrzeugs plus gegebenenfalls ein vorgegebener Sicherheitsabstand), und durch Abschätzen des erreichten Querversatzes über die zeitlich integrierte Gierrate kann erkannt werden, ob ein hinreichender Querversatz erreicht wurde und somit ein weiteres Einlenken des Fahrers nur die Fahrstabilität gefährden würde.

Gemäß einer alternativen bevorzugten Ausführungsform der Erfindung wird eine geeignete Ausweichtrajektorie berechnet, insbesondere zum Zeitpunkt des Beginns der ersten Phase. Während dies einen höheren Rechenaufwand erfordert, lassen sich dadurch ausgehend von der momentanen Position und dem Fahrzustand des Fahrzeugs geeignete Eingriffszeitpunkte und die benötigte Gierrate besonders genau bestimmen.

Gemäß einer besonders bevorzugten Ausführungsform der Erfindung wird eine benötigte Gierrate in Abhängigkeit von der berechneten Ausweichtrajektorie ermittelt, und insbesondere die Stärke der Dämpfung einer Lenkbewegung des Fahrers wird nach Maßgabe der benötigten Gierrate gewählt. Anhand der bekannten Ausweichtrajektorie lässt sich das Fahrmanöver möglichst sanft (mit geringer Querbeschleunigung) durchführen.

Gemäß einer besonders bevorzugten Ausführungsform der Erfindung wird anhand einer Betrachtung der integrierten Gierrate und des benötigten Querversatzes oder einer berechneten Ausweichtrajektorie ein optimaler Umlenkzeitpunkt berechnet, und nach Überschreiten des optimalen Umlenkzeitpunkts wird in einer dritten Phase ein Lenken des Fahrers in Ausweichrichtung noch stärker gedämpft. Wenn erkannt wird, dass der Fahrer den optimalen Umlenkzeitpunkt verpasst hat, kann eine besonders starke Gierratendämpfung die Fahrsicherheit erhöhen.

Es ist vorteilhaft, wenn eine Bremsschlupfregelung dahingehend modifiziert wird, dass zugunsten größerer Querkräfte die Längskräfte reduziert werden, sobald eine Lenkbewegung des Fahrers erfolgt. Wenn der Fahrer entscheidet, dass in der vorliegenden Situation ein Zusammenstoß besser durch Ausweichen als durch eine reine Vollbremsung ohne Lenkbewegung vermieden werden kann, so wird zweckmäßigerweise ein geringfügig erhöhter Bremsweg zugunsten deutlich verbesserter Lenkbarkeit in Kauf genommen.

Die Erfindung betrifft weiterhin ein elektronisches Steuergerät, insbesondere ein elektronisches Bremsensteuergerät, welches Informationen eines oder mehrerer Umfeldsensoren, insbesondere Radarsensoren und/oder Kameras, empfängt und mit einem oder mehreren Fahrzeugsensoren, insbesondere Lenkwinkelsensor und/oder Gierratensensor und/oder Raddrehzahlsensoren, verbunden ist, und welches durch eine Ansteuerung von Aktuatoren einen fahrerunabhängigen Aufbau und eine Modulation der Bremskräfte an den einzelnen Rädern des Fahrzeugs bewirken kann. Erfindungsgemäß wird von dem Steuergerät ein Verfahren nach mindestens einem der vorhergehenden Ansprüche durchgeführt wird.

Weitere bevorzugte Ausführungsformen ergeben sich aus den Unteransprüchen und der nachfolgenden Beschreibung eines Ausführungsbeispiels an Hand von Figuren.

Es zeigen
- Fig. 1: ein zur Durchführung des Verfahrens geeignetes Kraftfahrzeug,
- Fig. 2: eine schematische Darstellung eines Ausweichvorgangs, und
- Fig. 3: ein Diagramm der Gierrate.

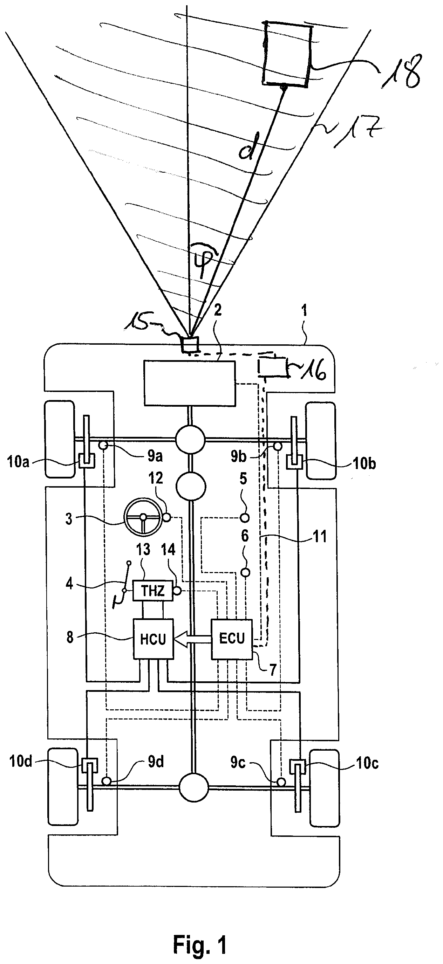

Figur 1 zeigt eine schematische Darstellung eines Kraftfahrzeugs 1, welches zur Durchführung des erfindungsgemäßen Verfahrens geeignet ist. Es weist einen Antriebsmotor 2, der zumindest einen Teil der Räder des Fahrzeugs antreibt, ein Lenkrad 3, ein Bremspedal 4, welches mit einem Tandemhauptzylinder (THZ) 13 verbunden ist, und vier individuell ansteuerbare Radbremsen 10a-10d auf. Das erfindungsgemäße Verfahren ist auch durchführbar, wenn nur ein Teil der Fahrzeugräder angetrieben wird. Neben oder alternativ zu hydraulischen Reibbremsen können auch an einem, mehreren oder allen Rädern elektromechanisch betätigte Reibbremsen als Radbremsen eingesetzt werden. Gemäß einer alternativen Ausführungsform der Erfindung weist das Fahrzeug einen elektrischen Antrieb auf, und das Bremsmoment an mindestens einem Rad wird zumindest teilweise von der oder den als Generator betriebenen elektrischen Maschine/n erzeugt.

Für die Erfassung von fahrdynamischen Zuständen sind ein Lenkradwinkelsensor 12 zur Messung des Lenkwinkels δ, vier Raddrehzahlsensoren 9a - 9d zur Messung der Drehgeschwindigkeiten Vi der einzelnen Räder, ein Querbeschleunigungssensor 5 zur Messung der Querbeschleunigung a_{Lat}, ein Gierratensensor 6 zur Messung der auch als Gierrate bezeichneten Gierwinkelgeschwindigkeit Ψ̇ und mindestens ein Drucksensor 14 für die Messung des von Bremspedal und THZ erzeugten Bremsdrucks p vorhanden. Dabei kann der Drucksensor 14 auch durch einen Pedalweg- oder Pedalkraftsensor ersetzt sein, falls die Hilfsdruckquelle derart angeordnet ist, dass ein vom Fahrer aufgebauter Bremsdruck von dem der Hilfsdruckquelle nicht unterscheidbar ist oder ein elektromechanischer Bremsaktuator mit bekanntem Zusammenhang zwischen Pedalstellung und Bremsmoment verwendet wird. Die Signale der Radsensoren werden einem elektronischen Steuergerät (ECU) 7 zugeführt, das anhand vorgegebener Kriterien aus den Raddrehgeschwindigkeiten **Vᵢ** die Fahrzeuggeschwindigkeit **v_{Ref}** ermittelt.

Die ECU (das elektronische Steuergerät) 7 empfängt die Daten der oben beschriebenen wie auch eventuell vorhandener weiterer Sensoren und steuert die Hydraulikeinheit (HCU) 8, um fahrerunabhängig einen Aufbau oder eine Modulation des Bremsdrucks in den einzelnen Radbremsen zu ermöglichen. Zusätzlich werden das aktuell von Antriebsmotor 2 erzeugte Antriebsmoment und das vom Fahrer gewünschte Moment bestimmt. Dabei kann es sich auch um indirekt ermittelte Größen handeln, die beispielsweise aus einem Motorkennfeld abgeleitet werden und der ECU 7 über eine Schnittstelle 11, z.B. einen CAN- oder FlexRay-Bus vom nicht gezeigten Motorsteuergerät übertragen werden.

Das Fahrverhalten des Kraftfahrzeugs 1 wird wesentlich durch die Fahrwerksauslegung beeinflusst, wobei unter anderem Radlastverteilung, Elastizität der Radaufhängungen und Reifeneigenschaften das Eigenlenkverhalten bestimmen. In bestimmten Fahrsituationen, welche durch einen vorgegebenen, gewünschten Kurvenradius und den Reibwerten zwischen Reifen und Fahrbahn gekennzeichnet sind, kann es zu einem Verlust der Fahrstabilität kommen, wobei das vom Fahrer gewünschte Lenkverhalten nicht erreicht werden kann. Mit den vorhandenen Sensoren kann der Fahrerwunsch erkannt und die Realisierung durch das Fahrzeug überprüft werden. Vorzugsweise wird bereits die Tendenz zu einem Verlust der Stabilität detektiert.

Die ECU 7 führt häufig mehrere Verfahren zur Regelung der Fahrstabilität aus, wobei eine Arbitrierung gegebenenfalls simultan eintreffender Bremsanforderungen stattfindet. So erfolgt vielfach eine Gierratenregelung, welche die gemessene Gierrate mit einer Modellgierrate vergleicht. Liegt diese Differenz über der Regeleintrittsschwelle beginnt der Bremseneingriff. Die Modellgierrate entspricht der Sollgierrate und wird durch ein einfaches Fahrzeugmodell über den Lenkwinkel und die Fahrzeuggeschwindigkeit gebildet. Daneben findet häufig eine Regelung der Schwimmwinkelgeschwindigkeit statt. Diese Größe wird auch über das Fahrzeugmodell gebildet und entspricht in Übersteuersituationen der Geschwindigkeit mit der das Fahrzeug eindreht bzw. das Fahrzeugheck ausschert. Sobald eine gewisse Schwelle für die Schwimmwinkelgeschwindigkeit überschritten ist, beginnt der Bremseneingriff. Am weitesten verbreitet ist eine Bremsschlupfregelung, welche ein Blockieren der Räder während eines Bremsvorgangs verhindert.

Weiterhin weist das Fahrzeug 1 eine Umfeldsensorik mit zumindest einem Umfeldsensor 15 auf, mit dem Objekte im Umfeld des Fahrzeugs erfasst werden können, bei denen es sich insbesondere um weitere Kraftfahrzeuge handelt, die sich in derselben oder einer benachbarten Fahrspur seitlich und/oder vor dem Fahrzeug 1 bewegen. Als Objekte kommen aber auch statische oder nahezu statische Objekte wie beispielsweise Bäume, Fußgänger oder Fahrbahnbegrenzungen in Frage. Beispielhaft wird ein Umfeldsensor 15 mit einem Erfassungsbereich 17 gezeigt, der einen Raumwinkel vor dem Fahrzeug 1 umfasst, in dem ein Objekt 18 dargestellt ist. Die Signale des Umfeldsensors 15 werden von einem Kontrollrechner 16 ausgewertet und entsprechende Informationen der ECU 7 zur Verfügung gestellt. Prinzipiell kann Kontrollrechner 16 aber auch in dem Umfeldsensor 15 integriert sein, und/oder die ECU 7 kann die Sensorsignale direkt verarbeiten.

Bei dem Umfeldsensor 15 handelt sich z.B. um einen an sich bekannten LIDAR-Sensor (Light Detection and Ranging) der die Abstände d zu den erfassten Punkten eines Objekts sowie die Winkel ϕ zwischen den Verbindungsgeraden zu diesen Punkten und der Mittellängsachse des Fahrzeugs misst, wie dies in Fig. 1 beispielhaft für einen Punkt des Objekts 18 veranschaulicht ist. Die dem Fahrzeug 1 zugewandten Fronten der erfassten Objekte setzen sich aus mehreren erfassten Punkten zusammen, zu der die Sensorsignale übermittelt werden, die Korrelationen zwischen Punkten und der Form eines Objekts herstellt und einen Bezugspunkt für das Objekt 18 bestimmt. Als Bezugspunkt kann dabei beispielsweise der Mittelpunkt des Objekts 18 bzw. der Mittelpunkt der erfassten Punkte des Objekts gewählt werden. Falls die Geschwindigkeiten der detektierten Punkte und damit die Geschwindigkeit der erfassten Objekte nicht direkt gemessen werden können, so werden Sie vorzugsweise aus der Differenz zwischen den in aufeinander folgenden Zeitschritten gemessenen Abständen berechnet. In ähnlicher Weise kann grundsätzlich auch die Beschleunigung der Objekte durch zweimaliges Ableiten ihrer Positionen bestimmt werden. Die Geschwindigkeit der Objekte kann z.B. auch mittels des Dopplereffekts bestimmt werden, insbesondere wenn es sich bei dem Umfeldsensor um einen Radarsensor handelt. Prinzipiell können auch eine oder mehrere Kameras bzw. andere Umfeldsensoren eingesetzt werden.

Wie in der Einleitung erläutert, kann manchmal ein Zusammenstoß mit einem Hindernis durch eine Vollbremsung, selbst unter optimaler Ausnutzung des Kraftschlusses, nicht vermieden werden. In solchen Situationen verhindert nur ein Ausweichmanöver, wie ein einfacher oder doppelter Spurwechsel, die Kollision.

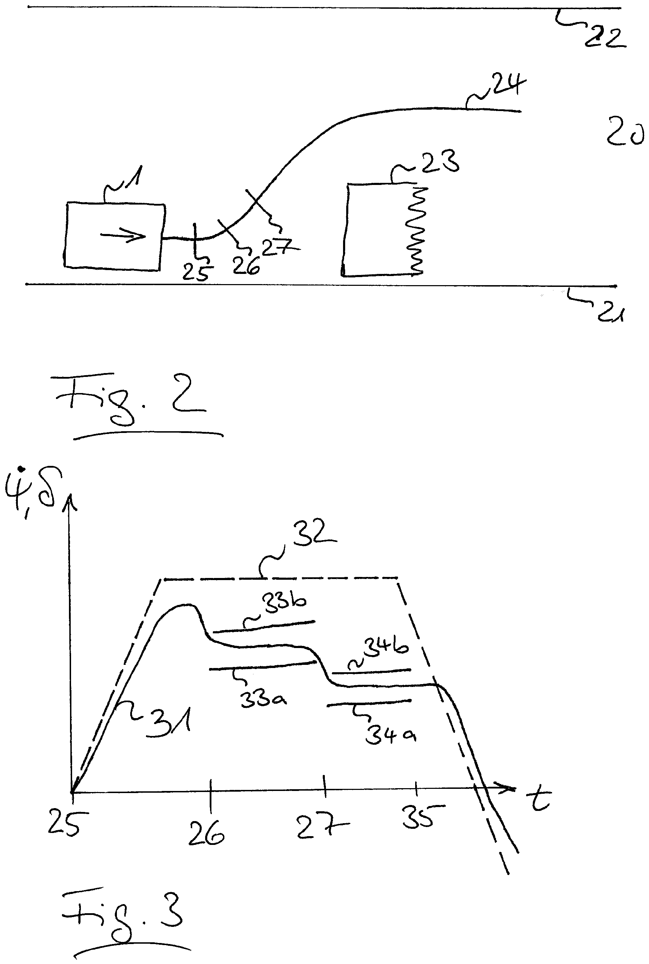

In Figur 2 ist eine schematische Darstellung eines Ausweichvorgangs gezeigt. Das Fahrzeug 1 fährt auf einer Straße 20 mit rechtem Fahrbahnrand 21 und linkem Fahrbahnrand 22 auf ein Hindernis 23, z.B. ein haltendes Fahrzeug zu. Um einen Zusammenstoß zu vermeiden, führt der Fahrer beispielsweise einen einfachen Spurwechsel durch, wobei das Fahrzeug der Trajektorie 24 folgt.

Hierbei beginnt der Fahrer an Punkt 25 mit einer Lenkbewegung, die unterstützt wird, indem durch entsprechende Bremseingriffe ein zusätzliches Giermoment in Ausweichrichtung (also dem vom Fahrer eingeschlagenen Lenkwinkel) aufgebaut wird.

Im Falle einer Vollbremsung wird zweckmäßigerweise in dem Moment, in dem der Fahrer einlenkt, die Längskraft am kurvenäußeren Vorderrad durch radindividuellen Abbau von Bremsdruck abgesenkt, damit das resultierende Giermoment die Lenkvorgabe des Fahrers unterstützt und das Fahrzeug dieser direkter folgt. Bei einer teilgebremsten Fahrt kann vorteilhafterweise ein Druckaufbau an einem kurveninneren Rad erfolgen.

Um einen Verlust der Stabilität durch Schleudern oder ein Umkippen bei hohem Fahrzeugschwerpunkt zu vermeiden, wird bereits in Punkt 26 ein Lenken des Fahrers gedämft, insbesondere indem entsprechende Bremseingriffe ein zusätzliches Giermoment entgegen der Ausweichrichtung erzeugen.

Während eines Spurwechsels erfolgt nach dem Ausweichen zweckmäßigerweise ein das Einlenken in die zweite Gasse unterstützender frühzeitiger und intensiver stabilisierender Bremseingriff am mittlerweile kurvenäußeren Vorderrad. Eine Gierratenregelung nach dem Stand der Technik greift zu diesem Zeitpunkt noch am mittlerweile kurveninneren Vorderrad ein. Nach erkannter Kollisionsgefahr und dem Einleiten eines Ausweichmanövers durch den Fahrer kann ein geeigneter Eingriff zum optimalen Zeitpunkt und ohne die Gefahr von Fehlregelungen durchgeführt werden.

Wenn ein optimaler Umlenkzeitpunkt insbesondere durch die Berechnung einer geeigneten Ausweichtrajektorie ermittelt werden kann, so erfolgt gemäß einer besonders bevorzugten Ausführungsform der Erfindung in Punkt 27 eine noch intensivere Gierdämpfung, bei der ein Lenken des Fahrers in Ausweichrichtung durch ein noch größeres entgegengesetztes Giermoment abgeschwächt wird.

Figur 3 zeigt ein Diagramm des zeitlichen Verlaufs von Gierrate und Lenkwinkel während eines Ausweichmanövers, wobei also Gierrate 31 und Lenkwinkel 32 auf der Ordinate dargestellt sind, und die Abszisse die Zeit angibt. Zum Zeitpunkt 25 beginnt der Fahrer einzulenken, woraufhin sich die Gierrate erhöht. Da die Umfeldsensorik eine Kollisionsgefahr erkannt hat, wird eine Lenkbewegung des Fahrers mit einem zusätzlichen Giermoment in Ausweichrichtung unterstützt. Somit erreicht das Fahrzeug schnell einen hohen Schwimmwinkel und einen entsprechenden Querversatz. Wenn anhand der integrierten Gierrate und des benötigten Querversatzes oder anhand der ermittelten Ausweichtrajektorie ein geeigneter Ausweichkurs erreicht wurde, erfolgt bereits vor dem Rücklenken des Fahrers ab dem Zeitpunkt 26 eine Gierdämpfung. Erkennt das System, dass der geeignete Rücklenkzeitpunkt 27 erreicht oder überschritten ist, so erfolgt zweckmäßigerweise - insbesondere wenn der Fahrer noch nicht zurücklenkt - eine nochmals verstärkte Gierdämpfung, wonach ein noch stärkeres Giermoment entgegen der Ausweichrichtung aufgebaut wird. Wenn der Fahrer zurücklenkt (zum Zeitpunkt 35), ist es vorteilhaft, die Ausweichunterstützung zu beenden. Durch eine weiterhin aktive Fahrdynamikregelung kann ein zu starkes Rücklenken verhindert werden, indem gegebenenfalls ein Übersteuereingriff erfolgt.

Bei dem Fahrmanöver kann gemäß einer bevorzugten Ausführungsform der Erfindung in einer Steuerung ein Zusatzgiermoment vorgegeben werden, in einer alternativen bevorzugten Ausführungsform der Erfindung findet eine Regelung anhand vorgegebener unterer und oberer Schwellen 33a, 34a und 33b, 34b statt. Zweckmäßigerweise werden die Schwellen der Regelung in Abhängigkeit von der Phase des Ausweichmanövers gewählt. Liegt keine Kollisionsgefahr mehr vor, und der Fahrer lenkt weiter ein, um eine Kurve zu fahren, so ist es vorteilhaft, das erfindungsgemäße Verfahren zu beenden.

Während des Spurwechsels muss einerseits ein starkes Übersteuern des Fahrzeugs vermieden werden, welches zu einem Verlust der Fahrstabilität führen würde, und andererseits sichergestellt werden, dass das Fahrzeug den Lenkvorgaben des Fahrers mit möglichst geringem Zeitversatz folgt. Eine Stabilisierung des Fahrzeugs während eines Spurwechsels ist insbesondere für Fahrzeuge mit hohem Schwerpunkt wichtig und erfordert wegen der hohen Dynamik des Manövers und der begrenzten Dynamik des Bremssystems einen rechtzeitigen Start der Bremseingriffe.

Nach dem Stand der Technik werden die Regelalgorithmen des Elektronik-Steuergeräts in einem Kompromiss aus Vermeidung von Fehleingriffen in unkritischen Situationen und geeigneter Stabilisierung während Spurwechseln abgestimmt. Durch diesen Kompromiss werden bei Spurwechselmanövern oft ungewollt hohe Schwimmwinkel erreicht, insbesondere bei Fahrzeugen mit hohem Schwerpunkt.

Auf Basis der durch die Umfeldsensorik gewonnenen Informationen über die Verkehrssituation wird das Bremsensteuergerät nun zweckmäßigerweise an kritische Situationen angepasst, um einen rechtzeitigen Beginn der Bremseneingriffe zu gewährleisten, während in unkritischen Situationen das Bremsensteuergerät in gewohnter Weise eingestellt ist.

Dies wird vorzugsweise dadurch realisiert, dass die Umfeldsensorik über einen Kommunikationsbus (wie CAN oder FlexRay) das Vorliegen einer kritischen Situation signalisiert. Empfängt das elektronische Steuergerät das Signal, so werden in einer bevorzugten Ausführungsform der Erfindung Regeleintrittsschwellen von Schwimmwinkelgeschwindigkeits- und Gierratenregelung abgesenkt und/oder Regelverstärkungen erhöht.

Um den kürzesten möglichen Bremswegs während einer Vollbremsung geradeaus zu gewährleisten, wird bei einer Bremsschlupfregelung nach dem Stand der Technik der Aufbau hoher Längskräfte gegenüber der Lenkbarkeit priorisiert. Dies führt dazu, dass zum Ausweichen jedoch hohe Lenkwinkel und Lenkwinkelgradienten notwendig sind, die ungeübte Fahrer überfordern.

Wird anhand des über die Umfeldsensorik bestimmten Abstands und der Relativgeschwindigkeit zwischen dem eigenen Fahrzeug und dem Hindernis erkannt, dass die Kollision durch eine Vollbremsung nicht mehr vermieden werden kann und/oder das Ausweichen durch den geringen Abstand nur mit sehr hoher Lenkdynamik möglich wäre, so wird in einer bevorzugten Ausführungsform der Erfindung in der Bremsschlupfregelung die Lenkbarkeit gegenüber dem kürzesten möglichen Bremsweg priorisiert. Dies kann insbesondere durch besonders frühzeitige Erkennung und entsprechende Reaktion auf Schlupfeinläufe an den Rädern geschehen. Somit wird die Dauer der Schlupfeinläufe reduziert und die Möglichkeit zum Aufbau von Querkräften beim Lenken ist immer gegeben.

Neben der Gefahr eines zu geringen und zu späten Lenkeingriffs, welcher zu einem Aufprall mit Teilversatz führen kann, besteht auch die Gefahr, dass ein übermäßiges Lenken die Fahrstabilität gefährdet und ein Umkippen des Fahrzeugs provoziert. Bei geeigneten Lenkzeitpunkten und angepassten Lenkamplituden kann das Hindernis häufig sicher mit genügen Abstand umfahren werden, ohne dass das eigene Fahrzeug im Grenzbereich zur Instabilität gefahren werden muss.

Wenn sich unter der Annahme, dass eine Lenkeingabe auf die bereits erfasste Weise fortgesetzt wird, eine wesentlich höhere Querbeschleunigung als notwendig resultiert, dann wird vorzugsweise ein geeigneter Bremseneingriff durchgeführt, der dämpfend auf das Gieren des Fahrzeugs wirkt, so dass sich bei Fortsetzung der Lenkeingabe die notwendige Querbeschleunigung bzw. Gierrate einstellt. Bei der Ermittlung des Zeitpunkts und des Betrags eines das Lenken des Fahrers dämpfenden Giermoments wird gemäß einer bevorzugten Ausführungsform der Erfindung eine Wankbewegung berücksichtigt, die beim Rücklenken zu heftigeren Fahrzeugreaktionen als beim Einlenken führt.

Da bei niedrigen Geschwindigkeiten oder geringen Abständen zum Hindernis hohe Gierraten zum sicheren Umfahren des Hindernisses notwendig sind, erfolgt beim Vorliegen dieser Bedingungen zweckmäßigerweise kein Aufbau eines dämpfenden Fahrzeuggiermoments.

Durch die beschriebenen Maßnahmen wird gewährleistet, dass das Fahrzeug sich während des Ausweichmanövers nur in wirklich notwendigen Fällen im Grenzbereich zur Instabilität befindet.

## Patentansprüche

1. Verfahren, bei dem das Fahrverhalten eines Fahrzeugs in Abhängigkeit von Umgebungsdaten beeinflusst wird, um ein Ausweichmanöver zu unterstützen, sobald eine Kollisionsgefahr anhand der Daten von einem oder mehreren Umfeldsensoren, insbesondere Radarsensoren und/oder Kameras, und der Daten von einem oder mehreren Fahrzeugsensoren, insbesondere Lenkwinkelsensor und/oder Gierratensensor und/oder Raddrehzahlsensoren, erkannt wird, wobei das Fahrzeug ein elektronisch geregeltes Bremssystem aufweist, welches einen fahrerunabhängigen Aufbau und eine Modulation der Bremskräfte an den einzelnen Rädern des Fahrzeugs ermöglicht, **dadurch gekennzeichnet, dass** bei erkannter Kollisionsgefahr in einer ersten Phase ein Einlenken des Fahrers unterstützt und in einer zweiten Phase ein Lenken des Fahrers gedämpft wird, wobei die zweite Phase noch vor einem Rücklenken des Fahrers beginnt.

2. Verfahren nach Anspruch 1, **dadurch gekennzeichnet, dass** in der ersten Phase mittels Bremseingriffen, insbesondere einer Bremskraftverringerung am kurvenäußeren Vorderrad oder einem Bremskraftaufbau an einem oder mehreren kurveninneren Rädern, ein zusätzliches Giermoment in Ausweichrichtung aufgebaut wird.

3. Verfahren nach Anspruch 1 oder 2, **dadurch gekennzeichnet, dass** in der zweiten Phase mittels Bremseingriffen, insbesondere am kurvenäußeren Vorderrad, ein zusätzliches Giermoment entgegen der Ausweichrichtung aufgebaut wird.

4. Verfahren nach mindestens einem der Ansprüche 2 oder 3, **dadurch gekennzeichnet, dass** zum Aufbau eines zusätzlichen Giermoments eine Anforderung an ein Fahrdynamikregelsystem erfolgt, insbesondere an ein ESC-System.

5. Verfahren nach mindestens einem der vorhergehenden Ansprüche, **dadurch gekennzeichnet, dass** das Lenken des Fahrers nur dann gedämpft wird, wenn die Fahrzeuggeschwindigkeit einen Fahrgeschwindigkeitsschwellenwert überschreitet.

6. Verfahren nach mindestens einem der vorhergehenden Ansprüche, **dadurch gekennzeichnet, dass** das Einlenken des Fahrers nur dann unterstützt wird, wenn die Lenkwinkelgeschwindigkeit einen Lenkschwellenwert unterschreitet.

7. Verfahren nach mindestens einem der vorhergehenden Ansprüche, **dadurch gekennzeichnet, dass** die Dämpfung einer Lenkbewegung des Fahrers in Abhängigkeit von einer gemessenen Querbeschleunigung und/oder einer gemessenen Gierrate und/oder einem geschätzten Reibwert erfolgt.

8. Verfahren nach mindestens einem der vorhergehenden Ansprüche, **dadurch gekennzeichnet, dass** zur Dämpfung einer Lenkbewegung des Fahrers bei einem System zur Regelung der Schwimmwinkelgeschwindigkeit ein Schwellenwert für die Aktivierung abgesenkt und/oder eine Verstärkung erhöht wird.

9. Verfahren nach mindestens einem der vorhergehenden Ansprüche, **dadurch gekennzeichnet, dass** bei einem System für eine Gierratentenregelung ein Schwellenwert für die Aktivierung abgesenkt und/oder eine Verstärkung erhöht wird.

10. Verfahren nach mindestens einem der vorhergehenden Ansprüche, **dadurch gekennzeichnet, dass** bei erkannter Kollisionsgefahr der Zeitpunkt des Beginns der ersten Phase anhand einer erkannte Lenkbewegung des Fahrers bestimmt wird.

11. Verfahren nach mindestens einem der vorhergehenden Ansprüche, **dadurch gekennzeichnet, dass** der Zeitpunkt des Beginns der zweiten Phase anhand einer Betrachtung der integrierten Gierrate und des benötigten Querversatzes bestimmt wird.

12. Verfahren nach mindestens einem der vorhergehenden Ansprüche, **dadurch gekennzeichnet, dass** eine geeignete Ausweichtrajektorie berechnet wird, insbesondere zum Zeitpunkt des Beginns der ersten Phase.

13. Verfahren nach Anspruch 12, **dadurch gekennzeichnet, dass** eine benötigte Gierrate in Abhängigkeit von der berechneten Ausweichtrajektorie ermittelt wird, und insbesondere die Stärke der Dämpfung einer Lenkbewegung des Fahrers nach Maßgabe der benötigten Gierrate gewählt wird.

14. Verfahren nach mindestens einem der Ansprüche 10 bis 13, **dadurch gekennzeichnet, dass** anhand einer Betrachtung der integrierten Gierrate und des benötigten Querversatzes oder einer berechneten Ausweichtrajektorie ein optimaler Umlenkzeitpunkt berechnet wird, und dass in einer dritten Phase nach Überschreiten des optimalen Umlenkzeitpunkts ein Lenken des Fahrers in Ausweichrichtung noch stärker gedämpft wird.

15. Verfahren nach mindestens einem der vorhergehenden Ansprüche, **dadurch gekennzeichnet, dass** eine Bremsschlupfregelung dahingehend modifiziert wird, dass zugunsten größerer Querkräfte die Längskräfte reduziert werden, sobald eine Lenkbewegung des Fahrers erfolgt.

16. Elektronisches Steuergerät, insbesondere elektronisches Bremsensteuergerät, welches Informationen eines oder mehrerer Umfeldsensoren, insbesondere Radarsensoren und/oder Kameras, empfängt und mit einem oder mehreren Fahrzeugsensoren, insbesondere Lenkwinkelsensor und/oder Gierratensensor und/oder Raddrehzahlsensoren, verbunden ist, und welches durch eine Ansteuerung von Aktuatoren einen fahrerunabhängigen Aufbau und eine Modulation der Bremskräfte an den einzelnen Rädern des Fahrzeugs bewirken kann, **dadurch gekennzeichnet, dass** von dem elektronischen Steuergerät ein Verfahren nach mindestens einem der vorhergehenden Ansprüche durchgeführt wird.

## Claims

1. Method in which the driving behavior of a vehicle is influenced as a function of data on the surroundings in order to assist an avoidance maneuver, as soon as a risk of a collision is detected on the basis of the data from one or more environment sensors, in particular radar sensors and/or cameras, and the data from one or more vehicle sensors, in particular a steering angle sensor and/or yaw rate sensor and/or wheel speed sensors, wherein the vehicle has an electronically controlled brake system which permits a driver-independent buildup and modulation of the braking forces at the individual wheels of the vehicle, **characterized in that** when a risk of a collision is detected, in a first phase a turning-in operation by the driver is assisted and in a second phase a steering operation by the driver is damped, wherein the second phase begins even before a return steering operation by the driver.

2. Method according to Claim 1, **characterized in that**, in the first phase, an additional yaw moment in the avoidance direction is built up by means of braking interventions, in particular a reduction in the braking force at the front wheel on the outside bend or a buildup of braking force at one or more wheels on the inside of the bend.

3. Method according to Claim 1 or 2, **characterized in that**, in the second phase, an additional yaw moment is built up counter to the avoidance direction by means of braking interventions, in particular at the front wheel on the outside of the bend.

4. Method according to at least one of Claims 2 or 3, **characterized in that** in order to build up an additional yaw moment a request is made to a vehicle movement dynamics control system, in particular an ESC system.

5. Method according to at least one of the preceding claims, **characterized in that** the steering operation by the driver is damped only when the vehicle speed exceeds a driving speed threshold value.

6. Method according to at least one of the preceding claims, **characterized in that** the turning-in operation by the driver is assisted only when the steering angle speed undershoots a steering threshold value.

7. Method according to at least one of the preceding claims, **characterized in that** the damping of a steering movement of the driver takes place as a function of a measured transverse acceleration and/or a measured yaw rate and/or an estimated coefficient of friction.

8. Method according to at least one of the preceding claims, **characterized in that** in order to damp a steering movement of the driver in the case of a system controlling the slip angle speed, a threshold value for the activation is lowered and/or boosting is increased.

9. Method according to at least one of the preceding claims, **characterized in that** in the case of a system for a yaw rate control a threshold value for the activation is lowered and/or boosting is increased.

10. Method according to at least one of the preceding claims, **characterized in that** when a risk of a collision is detected the time of the start of the first phase is determined on the basis of a detected steering movement of the driver.

11. Method according to at least one of the preceding claims, **characterized in that** the time of the start of the second phase is determined on the basis of a consideration of the integrated yaw rate and of the required lateral offset.

12. Method according to at least one of the preceding claims, **characterized in that** a suitable avoidance trajectory is calculated, in particular at the time of the start of the first phase.

13. Method according to Claim 12, **characterized in that** a required yaw rate is determined as a function of the calculated avoidance trajectory, and in particular the strength of the damping of a steering movement of the driver is selected in accordance with the required yaw rate.

14. Method according to at least one of Claims 10 to 13, **characterized in that** an optimum deviation time is calculated on the basis of a consideration of the integrated yaw rate and of the required lateral offset or of a calculated avoidance trajectory, and **in that** in a third phase a steering operation of the driver in the avoidance direction is damped even more greatly after the optimum deviation time has been exceeded.

15. Method according to at least one of the preceding claims, **characterized in that** a brake slip control system is modified to the effect that the longitudinal forces are reduced in favor of relatively large lateral forces as soon as a steering movement of the driver takes place.

16. Electronic control unit, in particular electronic brake control unit, which receives information of one or more environment sensors, in particular radar sensors and/or cameras, and is connected to one or more vehicle sensors, in particular a steering angle sensor and/or yaw rate sensor and/or wheel speed sensors, and which can bring about, by actuating actuators, a driver-independent buildup and modulation of the braking forces at the individual wheels of the vehicle, **characterized in that** the electronic control unit carries out a method according to at least one of the preceding claims.

## Revendications

1. Procédé avec lequel la tenue de route d'un véhicule est influencée en fonction de données environnementales afin d'assister une manoeuvre d'évitement dès qu'un risque de collision est reconnu au moyen des données d'un ou plusieurs capteurs d'environnement, notamment des capteurs radar et/ou des caméras, et des données d'un ou plusieurs capteurs de véhicule, notamment un capteur d'angle de braquage et/ou un capteur de taux de lacet et/ou des capteurs de vitesse de rotation des roues, le véhicule possédant un système de freinage à régulation électronique qui permet une application et une modulation des forces de freinage indépendamment du conducteur sur les roues individuelles du véhicule, **caractérisé en ce qu'**en présence d'un risque de collision reconnu, un braquage par le conducteur est assisté dans une première phase et, dans une deuxième phase, un contrôle de la direction par le conducteur est amorti, la deuxième phase commençant encore avant un contre-braquage par le conducteur.

2. Procédé selon la revendication 1, **caractérisé en ce que** dans la première phase, un moment de lacet supplémentaire est établi dans la direction de l'évitement au moyen d'interventions de freinage, notamment une réduction de la force de freinage au niveau de la roue avant extérieure au virage ou une application de la force de freinage sur une ou plusieurs roues intérieures au virage.

3. Procédé selon la revendication 1 ou 2, **caractérisé en ce que** dans la deuxième phase, un moment de lacet supplémentaire est établi à l'opposé de la direction de l'évitement au moyen d'interventions de freinage, notamment au niveau de la roue avant extérieure au virage.

4. Procédé selon au moins l'une des revendications 2 ou 3, **caractérisé en ce que** pour l'établissement d'un moment de lacet supplémentaire, une demande est émise auprès d'un système de régulation de la dynamique de conduite, notamment d'un système ESC.

5. Procédé selon au moins l'une des revendications précédentes, **caractérisé en ce que** le contrôle de la direction par le conducteur n'est amorti que lorsque la vitesse du véhicule dépasse une valeur de seuil de vitesse du véhicule.

6. Procédé selon au moins l'une des revendications précédentes, **caractérisé en ce que** le contrôle de la direction par le conducteur n'est assisté que lorsque la vitesse angulaire de direction devient inférieure à un seuil de contrôle de direction.

7. Procédé selon au moins l'une des revendications précédentes, **caractérisé en ce que** l'amortissement d'un mouvement de contrôle de direction par le conducteur s'effectue en fonction d'une accélération transversale mesurée et/ou d'un taux de lacet mesuré et/ou d'un coefficient de friction estimé.

8. Procédé selon au moins l'une des revendications précédentes, **caractérisé en ce que** pour amortir un mouvement de contrôle de direction par le conducteur dans le cas d'un système de régulation de la vitesse angulaire de glissement, une valeur de seuil pour l'activation est diminuée et/ou une amplification est augmentée.

9. Procédé selon au moins l'une des revendications précédentes, **caractérisé en ce que** dans le cas d'un système de régulation du taux de lacet, une valeur de seuil pour l'activation est diminuée et/ou une amplification est augmentée.

10. Procédé selon au moins l'une des revendications précédentes, **caractérisé en ce que** dans le cas d'un risque de collision reconnu, l'instant du début de la première phase est déterminé au moyen d'un mouvement reconnu de contrôle de direction par le conducteur.

11. Procédé selon au moins l'une des revendications précédentes, **caractérisé en ce que** l'instant du début de la deuxième phase est déterminé au moyen d'une observation du taux de lacet intégré et du décalage transversal nécessaire.

12. Procédé selon au moins l'une des revendications précédentes, **caractérisé en ce qu'**une trajectoire d'évitement appropriée est calculée, notamment à l'instant du début de la première phase.

13. Procédé selon la revendication 12, **caractérisé en ce qu'**un taux de lacet nécessaire est déterminé en fonction de la trajectoire d'évitement calculée, et l'intensité de l'amortissement d'un mouvement de contrôle de direction par le conducteur est notamment sélectionnée en fonction du taux de lacet nécessaire.

14. Procédé selon au moins l'une des revendications 10 à 13, **caractérisé en ce qu'**un instant de changement de direction optimal est calculé à l'aide d'une observation du taux de lacet intégré et du décalage transversal nécessaire ou d'une trajectoire d'évitement calculée et **en ce que** dans une troisième phase, après avoir dépassé l'instant de changement de direction optimal, un contrôle de la direction par le conducteur dans le sens de l'évitement est amorti encore plus fortement.

15. Procédé selon au moins l'une des revendications précédentes, **caractérisé en ce qu'**une régulation du patinage de freinage est modifiée dans le sens où les forces longitudinales sont réduites en faveur de forces transversales plus élevées dès qu'un mouvement de contrôle de direction par le conducteur a lieu.

16. Contrôleur électronique, notamment contrôleur de freinage électronique, lequel reçoit des informations de la part d'un ou plusieurs capteurs d'environnement, notamment des capteurs radar et/ou des caméras et est relié à un ou plusieurs capteurs de véhicule, notamment un capteur d'angle de braquage et/ou un capteur de taux de lacet et/ou des capteurs de vitesse de rotation des roues, et lequel peut produire, par une commande des actionneurs, une application et une modulation des forces de freinage indépendamment du conducteur sur les roues individuelles du véhicule, **caractérisé en ce qu'**un procédé selon au moins l'une des revendications précédentes est mis en oeuvre par le contrôleur électronique.
